(19) Europäisches Patentamt
European Patent Office
Office européen des brevets

(11) Publication number : **0 450 913 A2**

# (12) EUROPEAN PATENT APPLICATION

(21) Application number : **91302879.1**

(22) Date of filing : **02.04.91**

(51) Int. Cl.⁵ : **E01H 12/00, A01B 51/00, B01D 24/20, B01D 24/26**

(30) Priority : **03.04.90 GB 9007439**

(43) Date of publication of application :
**09.10.91 Bulletin 91/41**

(84) Designated Contracting States :
**BE DE FR GB NL**

(71) Applicant : **SMALLEY EXCAVATORS LTD**
**Cherry Holt Road**
**Bourne, Lincolnshire PE10 9LQ (GB)**

(72) Inventor : **Smalley, Richard**
**Ford House, Ford Lane, Morton**
**Nr Bourne, Lincolnshire PE10 ORQ (GB)**

(74) Representative : **Dealtry, Brian et al**
**Eric Potter & Clarkson St. Mary's Court St.**
**Mary's Gate**
**Nottingham NG1 1LE (GB)**

(54) A vehicle for skimming a surface.

(57) A vehicle for skimming and removing a surface layer of particulate material from a bed of such material, the vehicle including skimming means movably mounted on the vehicle for skimming the surface layer of material and a take-away conveyor mounted on the vehicle, the skimming means being arranged to transport the skimmed material to the take-away conveyor which, in turn, conveys the skimmed material to a remote location for collection.

FIG 1

The present invention relates to a vehicle for removing a surface layer of particulate material from a bed of such material.

In water purification plants, filter beds are used which include a bed of sand through which water is passed for filtration. The surface layer of the bed of sand tends to clog after a period of use due to the presence of algae. Accordingly, periodically, the filter bed has to be drained and the surface layer of sand removed for cleaning and washing. It is desirable to perform the operation of removal of the surface layer as quickly as possible in order to enable the filter bed to begin operation again. In addition, it is desirable to only remove the contaminated surface layer in order to reduce to a minimum the quantity of sand for cleaning and washing.

A general aim of the present invention is to provide a vehicle which is able to skim and remove a surface layer of particulate material from a bed of such material.

According to the present invention, there is provided a vehicle for skimming and removing a surface layer of particulate material from a bed of such material, the vehicle including skimming means movably mounted on the vehicle for skimming the surface layer of material and a take-away conveyor mounted on the vehicle, the skimming means being arranged to transport the skimmed material to the take-away conveyor which, in turn, conveys the skimmed material to a remote location for collection.

Preferably the skimming means is mounted on the takeaway conveyor, the takeaway conveyor being movably mounted on the vehicle between an operative lower position whereat the skimming means is in co-operative contact with the surface of the bed of material and an inoperative elevated position whereat the skimming means is raised above the surface of the bed of material to enable the vehicle to travel between sites.

The take-away conveyor preferably includes an elongate conveyor frame which is pivotally attached at an intermediate location between its ends to the vehicle body, the skimming means being supported by and mounted on the input end of the conveyor frame, the conveyor frame being pivotally movable between the operative lower position and the inoperative elevated position.

Preferably the skimming means is movably mounted on the takeaway conveyor so that when the conveyor is in its operative lower position, the skimming means position above the bed may be adjusted in order to vary the depth of surface layer to be skimmed from the bed of material.

Alternatively, the skimming means may be fixedly mounted on the conveyor frame and is provided with height adjustable stop means for engaging with the surface of said bed of material to define the height position of said operative lower position for adjusting the depth of surface layer to be skimmed from the bed of material.

Preferably the skimming means comprises a shaft extending laterally from both sides of the input end of the conveyor, the shaft on one side of the conveyor having a first helical flange formation extending therealong and on the other side of the conveyor having a second helical flange formation extending therealong, the first and second helical flange formations being of opposite sense such that rotation of the shaft in one direction causes material engaged by the flange formations to be conveyed toward the central portion of the shaft whereat the input end of the conveyor is located, elevation means being provided at the central location of the shaft to elevate material conveyed by the helical flange formations onto the input end of the conveyor for transport away. The elevation means conveniently comprises paddle blades.

Preferably, the conveyor frame extends forwardly of the vehicle body to support the skimming means and also extends rearwardly of the vehicle body such that the discharge end of the conveyor is located at an elevated position at a rearward location of the vehicle to enable material to be discharged into a receiving receptacle such as a trailer or truck vehicle.

Preferably the vehicle has four steerable wheels each of which is power driven to give four wheel drive. In addition, four wheel differential locking is provided. In this way a highly manoeuvrable vehicle is provided.

Various aspects of the present invention are hereinafter described with reference to the accompanying drawings, in which:-

Figure 1 is a schematic side view of a vehicle according to the present invention;

Figure 2 is an enlarged side view of the skimming means shown in Figure 1;

Figure 3 is a schematic front view of the skimming means shown in Figure 2;

Figure 4 is a schematic plan view of the vehicle shown in Figure 1.

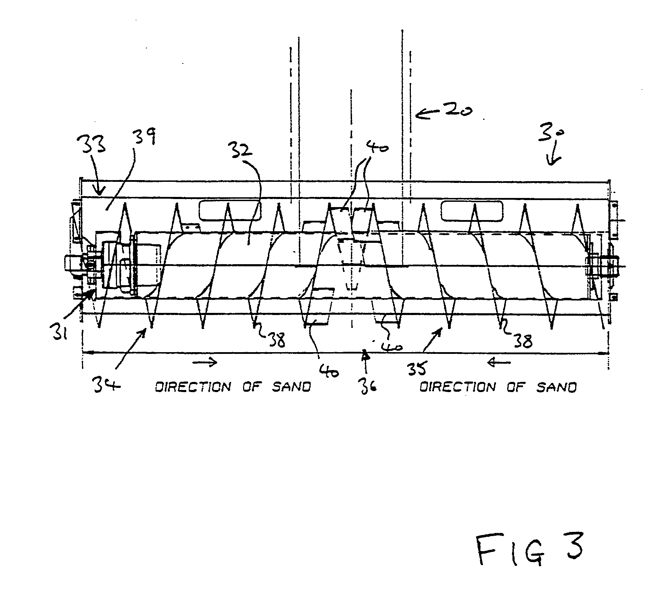

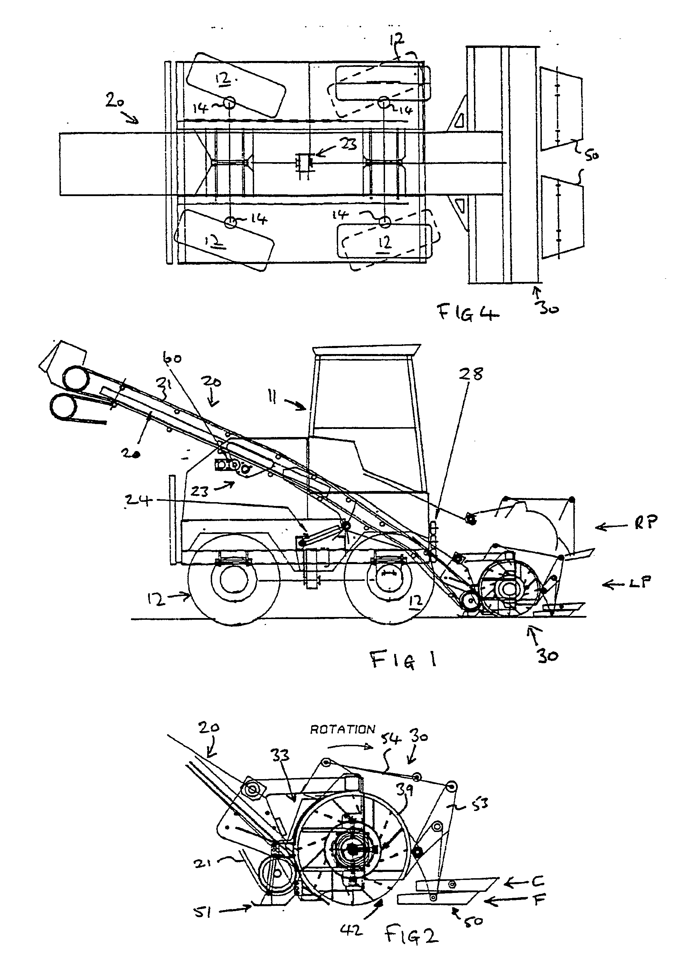

Referring initially to Figures 1 and 4, there is shown a vehicle 10 having a body chassis 11 supported by four wheels 12. Each wheel 12 is mounted to the body via pivotal connections 14 which enable each wheel to be steered. The vehicle includes an internal combustion engine (not shown) which provides hydraulic pressure for driving the various fluid couplings/pistons provided. Each pivot 14 is provided with a fluid motor (not shown) in order to enable steerage. Each wheel is also driven by a fluid motor (not shown) to thereby drive the vehicle.

An elongate conveyor frame 20 having a flexible conveyor belt 21 is mounted centrally of the vehicle and extends both rearwardly and forwardly of the vehicle.

The frame 20 is mounted to the body/chassis of the vehicle via a pivotal connection 23. The pivotal connection 23 preferably comprises a spherical bearing arrangement 60 which enables the conveyor frame 20 to float laterally as well as being capable of elevation between raised and lowered positions. A hydraulic ram 24 is provided which is arranged between the body/chassis 11 and the frame 20 for moving the frame 20 about its pivotal connection 23 so as to move the frame 20 between an operative lower position LP as shown in Figure 1 to an operative raised position RP (shown in ghost lines in Figure 1). The body/chassis 11 is preferably provided with guide rollers 28 which help guide the movement of the frame 20 between its lower and raised positions.

A skimming means 30 is fixedly mounted on the input end of the conveyor frame 20. The skimming means 30 preferably comprises a shaft 32 which is rotatably supported at opposite ends in a housing 33. The shaft 32 is driven by a hydraulic motor 31 and includes a first helical formation 34 extending from a central location 36 of the shaft 32 to one end and a second helical formation 35 extending from the central location 36 to the other end of the shaft. Each helical formation preferably comprises a single start helical flange 38 which extends from the shaft to close proximity with the surrounding wall 39 of housing 33. Accordingly, each helical formation 35, together with wall 39, form an archimedean screw.

Both helical formations may comprise more than one helical flange if desired.

Both helical formations are of the opposite sense so that rotation of the shaft in one direction causes material being conveyed by the helical formations to be moved towards the central location 36 along the surface of the bed of material.

In order to remove the skimmed material away from the surface of the bed of material, elevations means, in the form of paddles 40, are located at the central location 36 for elevating the skimmed material onto the inlet end of the conveyor belt 21. The conveyor belt 21 preferably includes raised ribs (conveniently of a chevron shape) for ensuring that material is positively conveyed away from the skimming means.

The wall 39 of the housing 33 envelopes the shaft apart from a lower opening 42 from which the lower region of helical formations project for skimming a surface layer of the particulate material. Front and rear skids 50,51 respectively are provided for supporting the housing 33 on the bed of particulate material, the front skids 50 being adjustable in height to enable different depths of surface layer to be removed. The front skids 50 therefore define height adjustable stop means for engaging the surface of the bed of material when the frame 20 is lowered to its operative lower position LP. When in the lower position LP, height adjustment of the skids 50 may be performed to vary the skimming depth.

In order to achieve height adjustment, the front skids 50 are accordingly mounted on pivoted arms 53 which are connected to a hydraulic ram 54 (shown schematically in Figures 1 and 2). The ram 54 may move the skids 50 between a lowermost position F whereat the skids 50 operate to enable the helical formations to remove a minimum depth of surface layer and an uppermost position C whereat the skids 50 operate to enable the helical formations to remove a maximum depth of surface layer. The minimum depth is preferably chosen to be about 5 mm and the maximum depth is chosen to be about 150 mm.

In use, the conveyor frame 20 is located in its raised position RP and is driven from site to site. When driven onto site, such as a sand bed of a water filter, the conveyor frame 20 is lowered to its lower operative position LP, whereat the lower portion of the helical flange formations is brought into contact with the surface of the bed. The depth to be skimmed is set (and adjusted during operation) by adjustment of height of the front skids 50. The shaft 32 is rotated and the conveyor belt 21 is driven. The vehicle is advanced and in so doing a surface layer of the bed is removed and deposited on the conveyor which, in turn, conveys the material to its elevated discharge end for discharge into a suitable container.

## Claims

1. A vehicle for skimming and removing a surface layer of particulate material from a bed of such material, the vehicle including skimming means movably mounted on the vehicle for skimming the surface layer of material and a take-away conveyor mounted on the vehicle, the skimming means being arranged to transport the skimmed material to the take-away conveyor which, in turn, conveys the skimmed material to a remote location for collection.

2. A vehicle according to Claim 1, wherein the skimming means is mounted on the take-away conveyor, the take-away conveyor being movably mounted on the vehicle between an operative lower position whereat the skimming means is in co-operative contact with the surface of the bed of material and an inoperative elevated position whereat the skimming means is raised above the surface of the bed of material to enable the vehicle to travel between sites.

3. A vehicle according to Claim 2, wherein the take-away conveyor includes an elongate frame which is pivotally attached at an intermediate location between its ends to the vehicle body, the skimming means being supported by and mounted the input end of the conveyor frame, the conveyor frame being pivotally movable between operative lower position and the in

vated position.

4. A vehicle according to Claim 3, wherein the conveyor frame extends forwardly of the vehicle body to support the skimming means and also extends rearwardly of the vehicle body such that the discharge end of the conveyor is located at an elevated position at a rearward location of the vehicle to enable material to be discharged into a receiving receptacle such as a trailer or truck vehicle.

5. A vehicle according to claim 2, 3 or 4, wherein height adjustable stop means are provided for engaging the surface of the bed of material to define the lower operative position of the take-away conveyor for determining the depth of surface layer to be skimmed.

6. A vehicle according to Claim 5, wherein the stop means comprise a skid movably mounted on the skimming means.

7. A vehicle according to Claim 1,2, 3 or 4, wherein the skimming means is movably mounted on the take-away conveyor so that when the conveyor is in its operative lower position, the skimming means position above the bed may be adjusted in order to vary the depth of surface layer to be skimmed from the bed of material.

8. A vehicle according to any preceding claim, wherein the skimming means comprises a shaft extending laterally from both sides of the input end of the conveyor, the shaft on one side of the conveyor having a first helical flange formation extending therealong and on the other side of the conveyor having a second helical flange formation extending therealong, the first and second helical flange formations being of opposite sense such that rotation of the shaft in one direction causes material engaged by the flange formations to be conveyed toward the control portion of the shaft, whereat the input end of the conveyor is located, elevation means being provided at the central location of the shaft to elevate material conveyed by the helical flange formations onto the input end of the conveyor for transport away.

9. A vehicle according to Claim 8, wherein the elevation means comprises paddle blades.

10. A vehicle according to any preceding claim including four steerable wheels, each of which is power driven to give four wheel drive.

FIG 3

FIG 4

FIG 1

ROTATION

FIG 2